Europäisches Patentamt

European Patent Office

Office européen des brevets

(11) Publication number: **0 072 708**
**B1**

## EUROPEAN PATENT SPECIFICATION

(45) Date of publication of patent specification: **23.07.86**

(51) Int. Cl.⁴: **G 06 K 15/10**

(21) Application number: **82304369.0**

(22) Date of filing: **19.08.82**

(54) **Printer.**

(30) Priority: **19.08.81 JP 128769/81**

(43) Date of publication of application:
**23.02.83 Bulletin 83/08**

(45) Publication of the grant of the patent:
**23.07.86 Bulletin 86/30**

(84) Designated Contracting States:
**FR GB**

(56) References cited:
**GB-A-1 461 559**
**US-A-4 203 154**

**IEEE TRANSACTIONS ON CONSUMER
ELECTRONICS, vol. CE-27, no. 1, February
1981, pages 102-116, New York (USA); C.H.
KAPLINSKY: "The D2Ba one logical wire bus for
consumer applications"**

(73) Proprietor: **FUJI XEROX CO., LTD.**
**No. 3-5, Akasaka 3-chome**
**Minato-ku Tokyo 107 (JP)**

(72) Inventor: **Murayama, Tomio**
**Fuji Xerox Co. Ltd. Ebina Works, No. 2274**
**Hongo Ebina-shi Kanagawa (JP)**
Inventor: **Kikuchi, Yoshiki**
**Fuji Xerox Co. Ltd. Ebina Works, No. 2274**
**Hongo Ebina-shi Kanagawa (JP)**
Inventor: **Ohmori, Takashi**
**Fuji Xerox Co. Ltd. Ebina Works, No. 2274**
**Hongo Ebina-shi Kanagawa (JP)**

(74) Representative: **Evershed, Michael et al**
**Marks & Clerk Alpha Tower Suffolk Street**
**Queensway**
**Birmingham B1 ITT (GB)**

(56) References cited:
**COMPUTERS DESIGN, vol. 19, no. 7, July 1981,
pages 40,44, Winchester, Mass. (USA); "Three
companies develop local network
specifications"**

Courier Press, Leamington Spa, England.

## Description

This invention relates to a printer in which a character code signal is received, and in which printing is carried out by reading pattern data corresponding to the character code signal out of a character pattern memory, and more particularly to a printer in which pattern data can be suitable written in a character pattern memory incorporated in the printer.

In a printer in which characters are divided into dots or strokes, the dots or strokes are stored in a character pattern memory, and the dots or strokes thus stored are read out for achieving a given printer operation. In such a system, the character pattern memory should have a capacity corresponding to the number of characters to be printed. Accordingly, a printer capable of printing a variety of characters requires a character pattern memory having a large capacity, whihc is uneconomical.

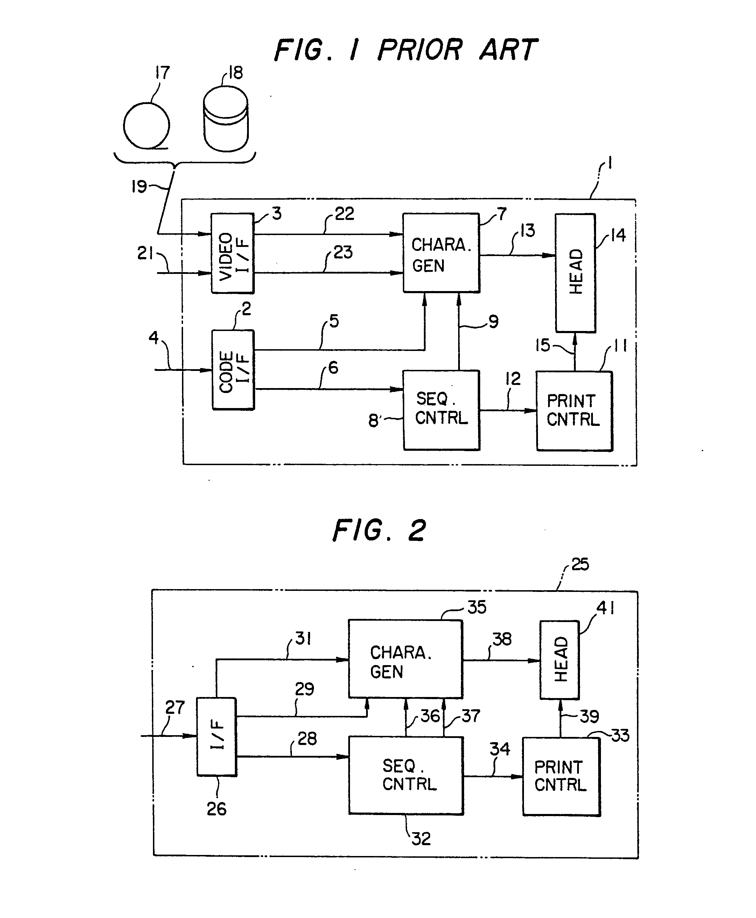

In order to overcome the above-described difficulty, a printer has been proposed in the art, which is designed so that pattern data from an external memory device can be suitably written in a character pattern memory incorporated in the printer. The printer thus proposed is as shown in Fig. 1. The printer 1 comprises a code interface 2 and a video interface 3. In the code interface 2, a code signal supplied thereto from a host system (not shown) is divided into a character code signal 5 and a control code signal 6. The character code signal is for specifying a character to be printed, and is applied to a character generating device 7. The control code signal 6 is supplied to a sequence control section 8, whereupon the latter supplies a memory access signal 9 to the character generating device 7 for accessing a memory, and a printing control signal 12 to a printing control section 11. With the aid of the character code signal 5 and the memory access signal 9, the character generating device supplies the pattern to be printed, as a video signal for each scanning line, to a thermal recording head 14. The thermal recording head 14 performs a printing operation for every line according to the head drive control signal 15 from the printing control section 11.

On the other hand, when the pattern of the characters to be printed is not stored in a character pattern memory (not shown) of the character generating device 7, a memory device, namely, a magnetic tape 17 or a magnetic disk 18 is caused to supply a video signal 19 containing characters to be newly stored, to the video interface 3. At the same time, the host system supplies a write instruction signal 21 to the video interface 3, for supplying addresses for storing the characters. In the video interface 3, these signals are converted into a video signal 22 and a write instruction signal 23, which are applied to the character generating device 7, so that the character pattern is stored in the corresponding memory region. The character pattern thus stored is read out with the aid of the character code signal 5 and the memory access signal 9 when required, to carry out the printing operation.

With the conventional printer, it is necessary to provide a particular signal line for transmitting the video signal 19 between the printer 1 and the external memory device, namely, the magnetic tape 17 or the magnetic disk 18, and to provide a particular signal line for transmitting the write instruction signal 21 between the host system and the printer 1. In addition, it is necessary to provide a video interface device capable of converting the signals 19 and 21 within the printer 1. Accordingly, the printer and the entire apparatus including the printer is bulky, and has a rather intricate control operation.

An object of this invention is to provide a printer in which pattern data can be suitably written in a character pattern memory without the need of the aforementioned particular signal lines.

According to this invention there is provided a printer comprising character generating means which includes a freely rewritable character pattern memory, a printing control section, a printing head for performing a printing operation on a recording medium according to a video pattern provided by said character generating means under the control of a head drive control signal supplied by the print control section, and sequence control means which supplies a printing control signal to the printing control section, characterized in that the printer further includes interface means for receiving an input signal over a single wire, said input signal including character codes for characters to be printed and a particular control code for instructing the rewriting of a portion of the character pattern memory, said particular control code being followed by data indicative of the address at which the character pattern memory is to be rewritten and the corresponding character pattern rewriting data, said interface means including means for recognizing said particular code and supplying both a character code signal and a pattern signal containing character pattern rewriting data to the character generating means and a control signal containing said data indicative of the address at which the character pattern memory is to be rewritten to said sequence control means, and said sequence control means supplying a write instruction signal and a memory access signal to said character generating means in response to said control signal from the interface means, whereby said freely rewritable character pattern memory stores data supplied by said input signal following said particular control code, and said character generating means accesses, according to a character code supplied by said input signal, a corresponding memory address to provide a video pattern for a character to be printed.

This invention will now be described by way of example with reference to the accompanying drawings in which:—

Figure 1 is a block diagram showing a conventional printer;

Figure 2 is a block diagram of a printer according to the invention;

Figure 3 is an explanatory diagram showing the content of an input signal for rewriting a character pattern for one character;

Figure 4 is an explanatory diagram showing the content of an input signal for rewriting character patterns in a particular area; and

Figure 5 is a circuit diagram showing the essential components of a character generating device.

Figure 2 shows the arrangement of a printer according to the invention. The printer 25 comprises an interface 26 such as an RS—232C according to the EIA standard or one according to the Centronics system, which is generally employed for a code input type printer. The interface 26 receives an input signal 27 from a hose system (not shown) and outputs a control code signal 28, a character code signal 29 or a video pattern 31. The control signal 28 also controls the discharge of a recording sheet for instance, and is applied to a sequence control section 32. The sequence control section 32 supplies a printing control signal 34 to a printer control section 33 and a write instruction signal 36 and a memory access signal 37 to a character generating device 35. The character generating device 35 receives the character code signal 29 and the video pattern 31 from the interface 26, and rewrites and reads a character pattern with the aid of these signals. The character generating device 35 outputs a video signal 38 for each scanning line. The video signal together with a head drive control signal 39 from the printing control section 33 are supplied to a thermal recording head 41, as a result of which character data are written on a heat-sensitive recording sheet line by line.

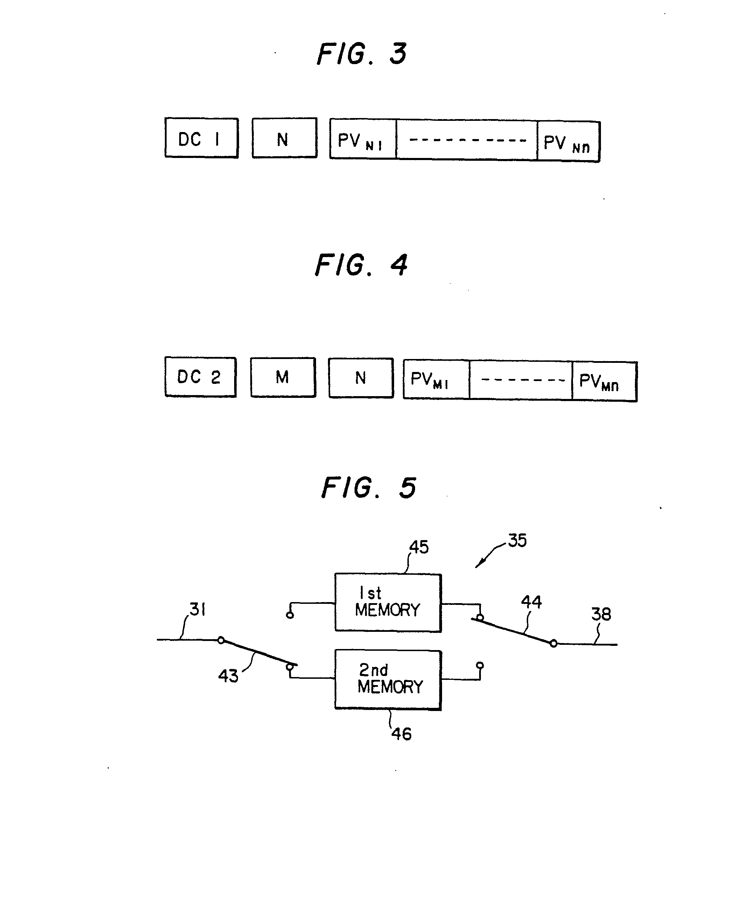

When a particular control code is supplied, as the input signal 27, to the interface 26 of the printer, the control code is recognized as a control code for instructing the rewriting of a character pattern memory by a code determining circuit (not shown). Figs. 3 and 4 show examples of the control code described above. Fig. 3 shows the content of an input signal for writing a character pattern for one character in the character pattern memory. In Fig. 3, the 1-byte signal "DC1" is a device control signal defined by the ASCII code. In this case, the signal "DC1" is a control code for instructing the rewriting of the pattern for one character. A 1-byte signal "N" next to the signal "DC1" is data which indicates the address of the character which is to be rewritten in the character pattern memory. The data "N" is followed by n-byte data "$PV_{N1}$" through "$PV_{Nn}$" (where n is an integer). The n-byte data represents the video data for one character, and is supplied as an input signal. In the case of the interface 26, the data $PV_{N1}$ through $PV_{Nn}$ are supplied, as the video pattern 31, to the character generating device, so that the data are written in the corresponding address with the aid of the write instruction signal 36 and the memory access signal 37.

On the other hand, Fig. 4 shows the content of an input signal for continuously writing a plurality of character patterns in a particular area of the character pattern memory. In Fig. 4, similarly, 1-byte signal "DC2" is a device controlling signal which is a control code for instructing the rewriting of all the patterns in a predetermined region. The signal "DC2" is followed by 1-byte signals "N" and "M", which are data specifying the addresses of the characters to be rewritten in the character pattern memory. The data "M" and "N" is followed by the data "$PV_{M1}$" through "$PV_{Mm}$", which is supplied, as the video pattern 31, to the character generating device 35. With the aid of the write instruction signal 36 and the memory access signal 37, the character generating device 35 rewrites the data in the corresponding addresses.

Fig. 5 shows the essential components of the character generating device 35, which, as illustrated, contains two change-over switches 43 and 44; and first and second character pattern memories 45 and 46 to which the video signal is alternately outputted, owing to the operations of the change-over switches. In this device, for example, while a thermal recording operation for one page is carried out with the video signal 38 outputed from the first character pattern memory 45, the video pattern 31 for the next page is supplied so as to be written in the second character pattern memory. Thus, by alternately using two character pattern memories, the throughput can be improved, and printed pages, for example letters or the like, can be successively produced in differing font.

As is apparent from the above description, according to the invention, a part of the control code supplied to the printer by the host system is determined as being a character pattern memory rewriting control code, and with the data supplied from the hose system in succession therewith the content of the character pattern memory is rewritten. Therefore, a printer which can produce various fonts without requiring intricate hardware, can be manufactured according to the invention.

In the above-described embodiment, two character pattern memories are provided in the character generating device. However, it goes without saying that, if a part or all of the character pattern memory is rewritten after the recording operation of one page has been finished but before the recording operation of the next page is started, a single character pattern memory is sufficient for the recording operation. Furthermore, it is not always necessary to perform rewriting of the data in the character pattern memory between the recording operations of two adjacent pages; that is, the rewriting may be carried out in parallel with the printing operation.

In the above embodiment, the video pattern is transmitted to the printer from the host system; however, it goes without saying that, in addition to the video pattern, character width data may also be transmitted. In this case, a proportional spacing printing method in which the length, in the main scanning direction, of the characters is varied, can be practiced.

## Claims

1. A printer comprising character generating means (35) which includes a freely rewritable character pattern memory, a printing control section (33), a printing head (41) for performing a printing operation on a recording medium according to a video pattern provided by said character generating means (35) under the control of a head drive control signal (39) supplied by the print control section (33), and sequence control means (32) which supplies a printing control signal (34) to the printing control section (33), characterized in that the printer further includes interface means (26) for receiving an input signal (27) over a single wire said input signal (27) including character codes for characters to be printed and a particular control code for instructing the rewriting of a portion of the character pattern memory, said particular control code being followed by data indicative of the address at which the character pattern memory is to be rewritten and the corresponding character pattern rewriting data, said interface means (26) including means for recognizing said particular code and supplying both a character code signal (29) and a pattern signal (31) containing character pattern rewriting data to the character generating means (35) and a control signal (28) containing said data indicative of the address at which the character pattern memory is to be rewritten to said sequence control means (32), and said sequence control means (32) supplying a write instruction signal (36) and a memory access signal (37) to said character generating means (35) in response to said control signal (28) from the interface means (26), whereby said freely rewritable character pattern memory stores data supplied by said input signal (27) following said particular control code, and said character generating means (35) accesses, according to a character code supplied by said input signal, a corresponding memory address to provide a video pattern for a character to be printed.

2. A printer as claimed in claim 1 characterized in that said input signal (27) includes a further control particular code for instructing the rewriting of a plurality of character patterns in a particular area of the charter pattern memory, said further particular control code being followed by data specifying the addresses of the characters to be rewritten and the corresponding character pattern rewriting data, said recognising means being arranged to recognize said further control code.

3. A printer as claimed in claim 2 characterized in that said character generating means (35) includes first and second character pattern memories (435, 46), and input and output switches (43, 44) for said memories (45, 46).

## Patentansprüche

1. Drucker mit einem einen frei regenerierbaren Zeichenmusterspeicher aufweisenden Zeichengenerator (35), einem Drucksteuerteil (33), einem Druckkopf (41) zur Durchführung eines Druckvorganges auf einen Aufzeichnungsträger entsprechend einem unter dem Einfluss eines vom Drucksteuerteil (33) gelieferten Druckkopf-Antriebssteuersignals (39) durch den Zeichengenerator (35) gelieferten Bildmuster, und mit Sequenzsteuermitteln (32), welche ein Drucksteuersignal (34) an den Drucksteuerteil (33) abgeben, dadurch gekennzeichnet, dass der Drucker ferner eine Schnittstelle (26) zur Aufnahme eines Eingangssignals (27) über einen einzigen Draht aufweist, wobei dieses Eingangssignal (27) Zeichencodes für die zu druckenden Zeichen und einen besonderen Steuercode zur Anweisung der Regenerierung eines Teiles des Zeichenmusterspeichers enthält, und der besondere Steuercode durch Daten, welche die Adresse angeben unter welcher der Zeichenmusterspeicher regeneriert werden soll und durch die korrespondierenden Zeichenregenerierdaten gefolgt wird, dass die Schnittstelle (26) Mittel zur Erkennung des besonderen Codes aufweist und ein Zeichencodesignal (29) sowie ein Zeichenmusterregenerierdaten enthaltendes Zeichenmustersignal (31) an den Zeichengenerator (35) und ein diese die Adresse unter welcher der Zeichenmusterspeicher regeneriert werden soll enthaltende Daten beinhaltendes Steuersignal (28) an die Sequenzsteuermittel (32) abgibt, und dass die Sequenzsteuermittel (32) als Antwort auf das von der Schnittstelle (26) erhaltene Steuersignal (28) ein Schreibbefehlsignal (36) und ein Speicherzugriffsignal (37) an den Zeichengenerator (35) abgeben, wodurch der frei regenerierbare Zeichenmusterspeicher durch das Eingangssignal (27) gelieferte, auf den besonderen Steuercode folgende Daten speichert, und der Zeichengenerator (35) entsprechenden einem durch das Eingangssignal gelieferten Zeichencode auf eine korrespondierende Speicheradresse zugreift um ein Bildmuster für ein zu druckendes Zeichen zu liefern.

2. Drucker wie in Anspruch 1 beansprucht, dadurch gekennzeichnet, dass das Eingangssignal (27) einen weiteren besonderen Steuercode zur Anweisung der Regenerierung einer Mehrzahl von Zeichenmustern in einem besonderen Bereich des Zeichenmusterspeichers enthält, dass dieser weitere besondere Steuercode durch die Adressen der zu regenerierenden Zeichen spezifizierenden Daten und durch die korrespondierenden Zeichenmuster-Regenerierdaten gefolgt wird, und dass die Erkennungsmittel ausgebildet sind, um diesen weiteren besonderen Code zu erkennen.

3. Drucker wie in Anspruch 2 beansprucht, dadurch gekennzeichnet, dass der Zeichengenerator (35) erste und zweite Zeichenmusterspeicher (45, 46) sowie Ein- und Ausgangsschalter (43, 44) für diese Speicher (45, 46) aufweist.

## Revendications

1. Imprimante comprenant un moyen générateur de symboles (35) qui comporte une mémoire de configurations de symboles dans laquelle il est possible de réécrire librement, une section de commande d'impression (33), une tête d'impression (41) permettant d'effectuer une opération d'impression sur un support d'enregistrement sur la base d'une configuration vidéo produite par le moyen générateur de symboles (35) sous commande d'un signal (39) de commande d'excitation de tête fourni par la section de commande d'impression (33), et un moyen de commande de séquence (32) qui délivre un signal de commande d'impression (34) à la section de commande d'impression (33), caractérisé en ce que l'imprimante comprend en outre un moyen d'interface (26) servant à recevoir un signal d'entrée (27) via a câble unique, ledit signal d'entrée (27) comportant des codes de symboles relatifs à des symboles à imprimer et un code de commande particulier servant à donner l'order de réécrire une partie de la mémoire de configurations de symboles, ledit code de commande particulier étant suivi par des données indiquant l'adresse à laquelle la mémoire de configurations de symboles doit être réécrite et par les données de réécriture de configurations de symboles correspondantes, ledit moyen l'interface (26) comportant un moyen qui permet de reconnaître ledit code particulier et qui délivre un signal de codage de symbole (29) et·un signal de configuration (31) contenant des donnés de réécriture de configurations de symboles au moyen générateur de symboles (35) et un signal de commande (28), contenant ladite donnée indiquant l'adresse à laquelle la mémoire de configurations de symboles doit être réécrite, audit moyen de commande de séquence (32), et ledit moyen de commande de séquence (32) délivrant un signal d'instruction d'écriture (36) et un signal d'accès en mémoire (37) audit moyen générateur de symboles (35) en réponse audit signal de commande (28) venant du moyen d'interface (26), si bien que ladite mémoire de configurations de symboles dans laquelle on peut réécrire librement emmagasine les données délivrées par ledit signal d'entrée (27) à la suite dudit code de commande particulier, et ledit moyen générateur de symboles (35) accède, en fonction d'un code de symbole délivré par ledit signal d'entrée, à une adresse de mémoire correspondante pour produire une configuration vidéo relative à un symbole à imprimer.

2. Imprimante selon la revendication 1, caractérisée en ce que ledit signal d'entrée (27) comporte un code particulier de commande supplémentaire servant à donner l'ordre de réécrire plusieurs configurations de symboles dans une zone particulière de la mémoire de configurations de symboles, ledit code de commande particulier supplémentaire étant suivi par des données indiquant les adresses des symboles à réécrire et les données de réécriture de configurations de symboles correspondantes, ledit moyen de reconnaissance étant conçu de façon à reconnaître l'edit code de commande particulier supplémentaire.

3. Imprimante selon la revendication 2, caractérisé en ce que ledit moyen générateur de symboles (35) comporte une première et une deuxième mémoire de configurations de symboles (45, 46) et des commutateurs d'entrée et de sortie (43, 44) associés auxdites mémoires (45, 46).

## FIG. I PRIOR ART

## FIG. 2

## FIG. 3

| DC 1 | N | $PV_{N1}$ | ---------- | $PV_{Nn}$ |

## FIG. 4

| DC 2 | M | N | $PV_{M1}$ | -------- | $PV_{Mn}$ |

## FIG. 5